# EUROPEAN PATENT SPECIFICATION

(11) **EP 1 650 115 B1**
(45) Date of publication and mention of the grant of the patent: **17.10.2007**
(21) Application number: 05270074.7
(22) Date of filing: 17.10.2005
(51) Int. Cl.: B62D 43/02

(54) **Spare wheel carrier for a motor vehicle**
Ersatzrad-Träger für Motorfahrzeug
Support de roue de secours pour véhicule à moteur

(30) Priority: 21.10.2004 GB 0423338
(43) Date of publication of application: 26.04.2006
(73) Proprietor: Ford Global Technologies, LLC, Dearborn, MI 48126 (US)
(72) Inventor: Godding, Christopher Robert, Solihull B91 1UL (GB)
(74) Representative: Gicquel, Olivier Yves Gérard

(56) References cited:
- EP-A- 0 994 011
- US-A- 1 974 599
- US-A- 4 410 117
- US-A- 4 485 945
- US-A1- 2005 023 315
- PATENT ABSTRACTS OF JAPAN vol. 1998, no. 02, 30 January 1998 (1998-01-30) & JP 09 272467 A (MITSUBISHI MOTORS CORP), 21 October 1997 (1997-10-21)

## Description

The present invention relates to a motor vehicle and in particular to an arrangement of a spare wheel carrier for mounting on a vehicle which has a tailgate which is rotatable about a lower hinge between a vertical, closed position and a horizontal, open position.

US 4 410 117 shows a spare wheel carrier which mounts the spare wheel in a vertical position behind the tailgate. The spare wheel carrier includes a bracket member fixed to the rear of the vehicle adjacent its tailgate. A frame is pivotally connected to bracket member at a horizontal axis offset from the hinge of the tailgate and an attachment plate mounted to the tailgate is slidably mounted to the frame to permit the frame and the tailgate to be moved simultaneously during the rotation of the latter.

US 4485945 shows a hinged spare wheel carrier folding downward by a linkage to a rotating tailgate.

It is a problem with such a known wheel carrier that, when the tailgate is lowered into the open position, the spare wheel extends rearwardly beyond the tailgate which makes it difficult for a user to reach into the luggage space and creating the strong probability that such a person will become soiled by the spare wheel.

It is an object of this invention to provide an improved motor vehicle having a wheel carrier which overcomes or minimises the problem associated with the prior art.

According to a first aspect of the invention there is provided a motor vehicle having a body structure, a tailgate which is rotatable about a tailgate pivot axis by means of a lower hinge connected to the body structure between a vertical, closed position and a horizontal, open position, a spare wheel mounted in a vertical position behind the tailgate when the tailgate is in the vertical position by means of a spare wheel carrier and a drive arrangement supporting the carrier on the body structure and arranged so that the spare wheel is moved between the vertical position and a horizontal position below the tailgate under the motion of the tailgate, wherein the drive arrangement is arranged to cause the spare wheel carrier to move relative to the tailgate towards the front of the vehicle when the tailgate is moved to the open position.

Preferably, the drive arrangement includes a hinge means defining a carrier pivot axis which is forward of the tailgate pivot axis, the carrier being rotatable about the carrier pivot axis.

Also preferably, the drive arrangement further includes a drive means for connecting the spare wheel carrier to the tailgate.

Preferably, the drive means comprises a pair of linkages which are releasable by means of a latching means controlled by a release lever positioned on the tailgate.

Conveniently, the hinge means comprises a pair of hinge assembly, each hinge assembly including a carrier arm which is pivoted about the carrier pivot axis to the body structure.

Preferably, each linkage comprises a link and a latch arm, the link being pivoted at one end to the carrier arm and at the other end pivoted intermediate of the ends of the latch arm, the latch arm being arranged such that one of its ends is pivoted to the bracket about the tailgate pivot axis and its other end has a striker for engagement with the tailgate by the latching means.

Also preferably, an assistance means is provided between the carrier and the vehicle body to counter the weight of the spare wheel.

Conveniently, the carrier comprises a cross member which acts as a bumper armature, and wherein the hinge means are located at each end of the cross member.

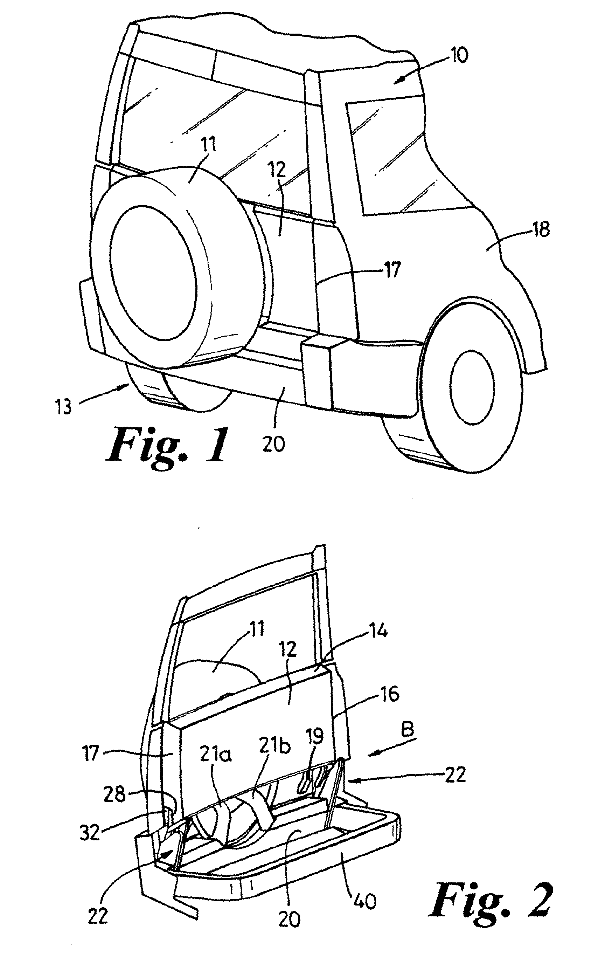

The invention will now be described by way of example with reference to the accompanying drawings of which:-
Fig.1 is a perspective rear view of a motor vehicle according to the invention showing a tailgate, spare wheel and a spare wheel carrier;
Fig.2 is a perspective view from the inside of the vehicle shown in Fig. 1 but with some part of the vehicle body omitted to show the spare wheel mounted of on the spare wheel carrier;
Fig. 3 is a side elevation view of the vehicle shown in Fig.1 showing the tailgate in an upright or closed position and the spare wheel carrier in an vertical position behind the tailgate;
Fig.4 is a view similar to Fig.3 but with the tailgate and the spare wheel carrier in an intermediate position;
Fig.5 is a view similar to Fig.3 but with the tailgate in a horizontal or open position and the spare wheel carrier in a horizontal or deployed;
Fig.6 is a view similar to Fig.3 but with the tailgate in the upright or closed position and the spare wheel carrier in the horizontal or deployed position;
Fig. 7 is a view similar to Fig.2 with the spare wheel carrier in the horizontal or deployed position and the tailgate in the intermediate position;
Fig. 8 is a perspective scrap view in to the direction of arrow B in Fig.2 to larger scale.

With reference to the drawings, a motor vehicle 10 has a spare wheel 11 mounted adjacent to a tailgate 12 by means of a spare wheel carrier 13.

Conventionally, the tailgate 12 has an upper edge 14, a lower edge 15 and lateral edges, referred to as left edge 16 and right edge 17, which form shut lines with a body structure 18 of the vehicle when the tailgate 12 is closed.

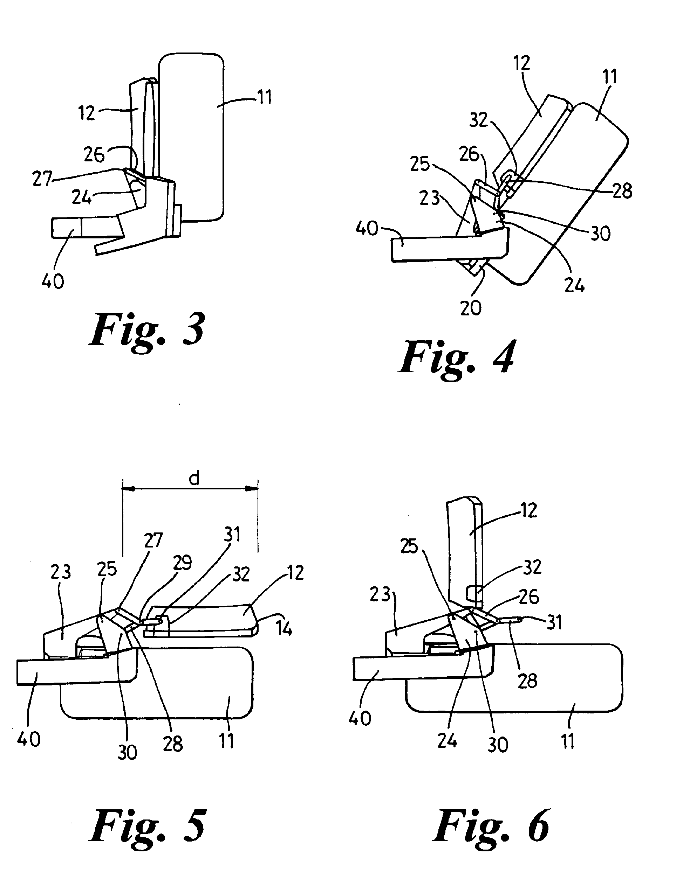

The tailgate 12 has its lower edge 15 secured to part of the body structure 18 by means of a pair of spaced apart hinges 19, forming a rotational axis A, for movement between a vertical, closed position (Fig. 3) and a horizontal, open position (Fig. 5) thus providing access to a luggage compartment (not shown) at the rear of the vehicle.

The spare wheel carrier 13 comprises a cross member 20 which, in this particular example, also acts as a bumper armature and a tubular frame 21. The frame 21 is generally shaped as an inverted U, having two legs 21 a, 21 b each of which is fixed to the cross-member 20. The wheel 11 is secured to the U-shaped frame 21 conventionally by means of nuts or bolts (not shown) and a winch (not shown) is provided to control movement of the wheel 11 down to the ground and to raise it.

The spare wheel carrier 13 is secured to the vehicle body 18 by hinge means comprising a pair of hinge assemblies 22, each hinge assembly being located at a respective end of the cross member 20 and adjacent the lateral side edge 16, 17 of the tailgate 12.

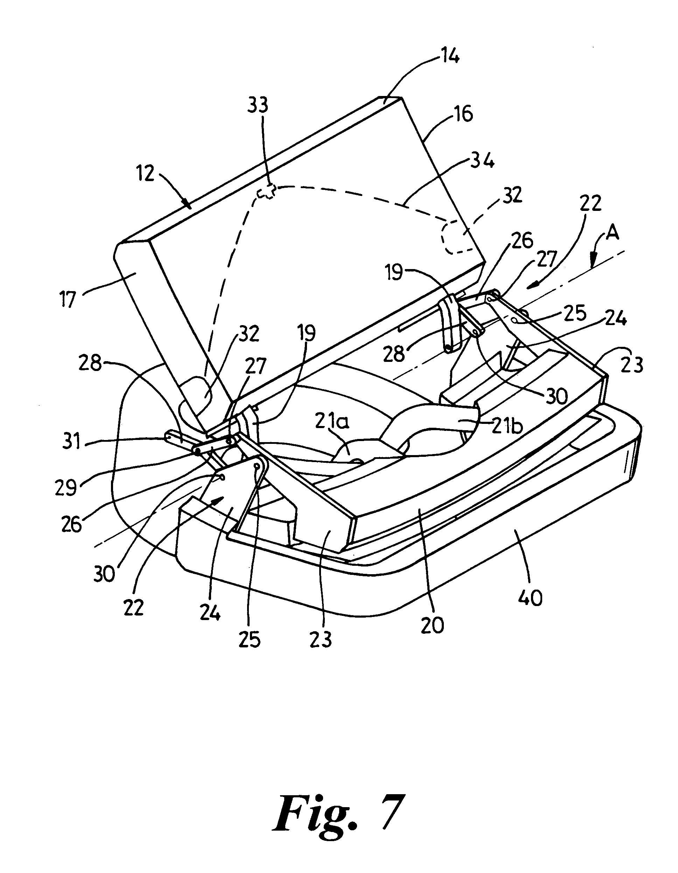

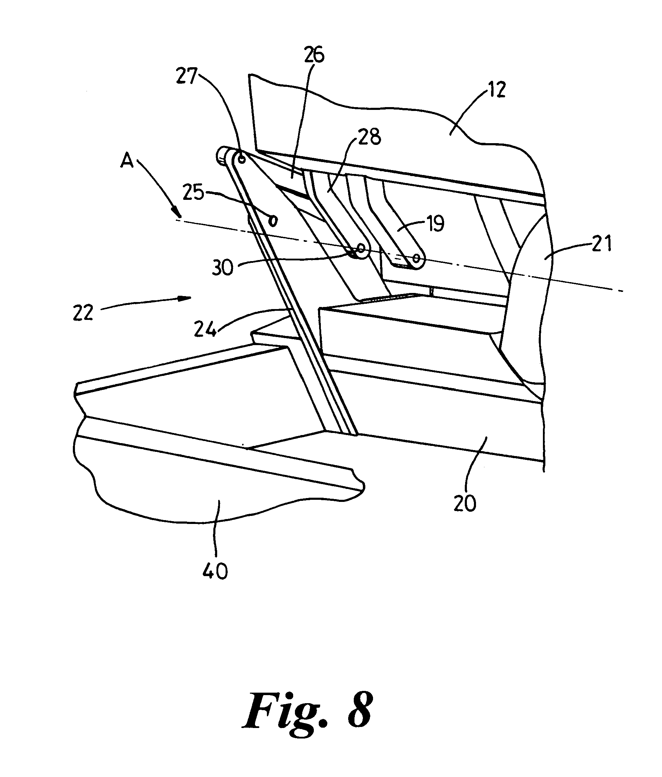

As illustrated in greater detail in Figures 7 and 8, each hinge assembly 22 comprises a carrier arm 23 attached to a respective end of the cross-member 20. The carrier arm 23 is mounted intermediate of its ends to a bracket 24 which is secured to the vehicle body, by means of a pivot 25, also referred to as a carrier pivot, so that both carrier arms 23 can pivot about a horizontal axis transverse to the longitudinal axis of the vehicle. The bracket 24 is secured to a U-shaped beam 40 which is connected to the vehicle frame (not shown).

The hinge assemblies 22 form part of a drive arrangement for moving the spare wheel carrier 13 relative to the tailgate 12 towards the front of the vehicle when the tailgate 12 is moved to open position. The drive arrangement also includes a pair of linkages by which the tailgate 12 can connect to the spare wheel carrier 13. Each linkage comprises a link 26 which is pivotally secured at one end to one end of the carrier arm 23 by means of a first pivot 27. The other end of the link 26 is pivotally secured to a latch arm 28 intermediate of its ends, by means of a second pivot 29. One end of the latch arm 28 is pivotally attached to the bracket 24 by means of a third pivot 30 which has its axis aligned with the rotational axis A of the tailgate 12. The other end of the latch arm 28 is adapted to engage a latch means 32 located on the lateral edge 16, 17 of the tailgate 12 by means of a striker 31.

The latch means 32 is connected to a release lever 33 by means of a release cable 34. The lever 33 is positioned near to the upper edge 14 of the tailgate 12. This allows for the latch arm 28 to be released from the tailgate 12 by the lever 33 in order to raise the tailgate 12 without the spare wheel carrier 13 (Fig. 6) and remove the wheel as it will be described in great detail below.

Operation of the spare wheel carrier 13 is as follows.

With the tailgate 12 and carrier 13 in the raised position as shown in Figure 3, each latch arm 28 is latched to the tailgate 12.

When the tailgate 12 is lowered towards the horizontal position, as shown Figures 4 and 5, the latch arm 28 will be rotated about the pivot 30 so that the link 26 pulls the end of the carrier arm 23 and allows the carrier 13 to pivot downwardly about the pivot 25, thereby lowering the carrier 13 with the tailgate 12. The carrier pivots 25 are arranged so that their axis is forward of the tailgate pivot axis A. In this way, the spare wheel 11 moves substantially parallel to the tailgate while the tailgate is being lowered so the spare wheel 11 does not extend significantly beyond the tailgate 12 when the tailgate 12 is horizontal, i.e. in the open position (Fig. 5).

It will be appreciated that an assistance means (not shown), e.g. a gas spring, could be provided between the carrier and the vehicle body, e.g. located behind the cross member 20 and attached to the vehicle body, in order to counterbalance the weigh of the spare wheel and the carrier during the downwardly rotation of the carrier and help the user to raise the carrier during the upwardly rotation of the carrier. This assistance means could be also used to bias the carrier 15 towards the tailgate 12 to avoid vibration and shake in the pair of linkages when the spare wheel carrier 15 is in vertical position adjacent to the tailgate.

To remove the wheel 11 from its stored position adjacent to the tailgate 12, the tailgate 12 is first lowered as immediately described above. The user then needs to actuate the lever 33 of the latch release means in order to release the latch arm 28 from the latch release means 32. This allows the tailgate 12 to be raised to its vertical, closed position without moving the carrier which stays at its horizontal position as shown in Fig. 6. From this position, the user then can release the wheel 11 from the frame 21 by removing the nuts, the wheel 11 then being secured to the frame 21 only by the winch. In a conventional manner the user can lower the wheel 11 by using the winch.

By providing such a drive arrangement of a spare wheel carrier several advantages are obtained over a carrier mentioned in the preamble of the description. Firstly, it makes it possible to keep a full sized spare wheel stored on the vehicle behind the tailgate with the spare wheel moveable between a vertical position in which the spare wheel is at a substantial height from the ground in order to get a sufficient rear departure angle when the vehicle is off-road and a horizontal position in which the spare wheel does not extend significantly beyond the tailgate so that a user can easily reach the luggage space. This result is advantageously obtained in the example described above by the fact that the bumper armature 20, the hinge assemblies 22 and part of the wheel 11 can be displaced under the vehicle and housed inside the U-shaped beam when the tailgate 12 is lowered. Secondly, in a preferred arrangement in order to increase the security of the spare wheel against the theft, the access to the nuts or bolts which secure the spare wheel on the tubular frame is only possible from the inside of the spare wheel, i.e. when the carrier is in horizontal position and the tailgate in closed position. In addition, the arrangement reduces the damage to the tailgate in case of rear impact by the fact that the structures of the carrier and the tailgate are separated and link together only by a pair of linkages, i.e. detachable latch arms.

Although the invention has been described by way of example with reference to a specific embodiment of the invention various modifications may be made without departing from the invention. For example, the hinge assemblies 22 could be replaced by another drive arrangement, e.g. toothed pinions and toothed tracks (where the toothed pinions correspond to the pivot axis of the carrier) in order to displace the pivot axis of the carrier forwards during lowering of the tailgate. Alternatively, the pivot axis of the carrier can be guided, e.g. in a pair of slots, in order to impart a combined sliding and rotational movement to the carrier when the tailgate is opened.

## Claims

1. A motor vehicle (10) having a body structure (18), a tailgate (12) which is rotatable about a tailgate pivot axis (A) by means of a lower hinge (19) connected to the body structure (18) between a vertical, closed position and a horizontal, open position, a spare wheel (11) mounted in a vertical position behind the tailgate (12) when the tailgate (12) is in the vertical position by means of a spare wheel carrier (13) and a drive arrangement (22, 26, 23, 28) supporting the carrier (13) on the body structure (18) and arranged so that the spare wheel (11) is moved between the vertical position and a horizontal position below the tailgate (12) under the motion of the tailgate (12), **characterized in that** the drive arrangement (22, 26, 23, 28) is arranged to cause the spare wheel carrier (13) to move relative to the tailgate (12) towards the front of the vehicle (10) when the tailgate (12) is moved to the open position.

2. A vehicle as claimed in claim 1 in which the drive arrangement includes a hinge means (22) defining a carrier pivot axis (25) which is forward of the tailgate pivot axis (A), the carrier (13) being rotatable about the carrier pivot axis (25).

3. A vehicle as claimed in claims 1 or claim 2 in which the drive arrangement further includes a drive means (26, 28) for connecting the spare wheel carrier (13) to the tailgate (12).

4. A vehicle as claimed in claims 3 in which the drive means comprises a pair of linkages (26, 28).

5. A vehicle as claimed in claim 3 or claim 4 in which the drive means is releasable by means of a latching means (32).

6. A vehicle as claimed in claim 5 in which the hinge means comprises a pair of hinge assembly (22), each hinge assembly (22) including a carrier arm (23) which is pivoted about the carrier pivot axis (25) to the body structure (18).

7. A vehicle as claimed in claim 6 in which each linkage comprises a link (26) and a latch arm (28), the link (26) being pivoted at one end to the carrier arm (23) and at the other end pivoted intermediate of the ends of the latch arm (28), the latch arm (28) being arranged such that one of its ends is pivoted to a bracket (24), which is secured to the vehicle body (18), about the tailgate pivot axis (A) and its other end has a striker (31) for engagement with the tailgate (12) by the latching means (32).

8. A vehicle as claimed in claim 7 in which the latching means (32) is controlled by a release lever (33).

9. A vehicle as claimed in claim 8 in which the release lever (33) is positioned on the tailgate (12).

10. A vehicle as claimed in any preceding claim in which an assistance means is provided between the carrier (13) and the vehicle body (18) to counter the weight of the spare wheel (11).

11. A vehicle as claimed in any preceding claim in which the carrier (13) comprises a winch used to move the spare wheel (11) from the carrier (13).

12. A vehicle as claimed in any of claims 2 to 11 in which the carrier (13) comprises a cross member (20) which acts as a bumper armature, and wherein the hinge means (22) are located at each end of the cross member (20).

## Patentansprüche

1. Kraftfahrzeug (10) mit einer Karosseriekonstruktion (18), einer Hecktür (12), die mittels eines mit der Karosseriekonstruktion (18) verbundenen unteren Scharniers (19) um eine Hecktürschwenkachse (A) zwischen einer vertikalen, geschlossenen Position und einer horizontalen, offenen Position drehbar ist, einem Reserverad (11), das mittels eines Reserveradhalters (13) in einer vertikalen Position hinter der Hecktür (12) montiert ist, wenn sich die Hecktür (12) in der vertikalen Position befindet, sowie mit einer Antriebsanordnung (22, 26, 23, 28), die den Halter (13) an der Karosseriekonstruktion (18) abstützt und so vorgesehen ist, dass das Reserverad (11) aufgrund der Bewegung der Hecktür (12) zwischen der vertikalen Position und einer horizontalen Position unter der Hecktür (12) bewegt wird, **dadurch gekennzeichnet, dass** die Antriebsanordnung (22, 26, 23, 28) so vorgesehen ist, dass sie bewirkt, dass sich das Reserverad (13) im Verhältnis zur Hecktür (12) hin zur Vorderseite des Fahrzeugs (10) bewegt, wenn die Hecktür (12) hin zur offenen Position bewegt wird.

2. Fahrzeug nach Anspruch 1, bei dem die Antriebsanordnung ein Scharniermittel (22) beinhaltet, das eine Halterschwenkachse (25) definiert, die vor der Hecktürschwenkachse (A) liegt, wobei der Halter (13) um die Halterschwenkachse (25) drehbar ist.

3. Fahrzeug nach Anspruch 1 oder Anspruch 2, bei dem die Antriebsanordnung weiterhin ein Antriebsmittel (26, 28) beinhaltet, um den Reserveradhalter (13) mit der Hecktür (12) zu verbinden.

4. Fahrzeug nach Anspruch 3, bei dem das Antriebsmittel ein Gestängepaar (26, 28) umfasst.

5. Fahrzeug nach Anspruch 3 oder Anspruch 4, bei dem das Antriebsmittel mittels eines Sperrklinkenmittels (32) freigegeben werden kann.

6. Fahrzeug nach Anspruch 5, bei dem das Scharniermittel ein Paar Scharniereinheiten (22) umfasst, wobei jede Scharniereinheit (22) einen Halterarm (23) beinhaltet, der um die Halterschwenkachse (25) zur Karosseriekonstruktion (18) schwenkbar ist.

7. Fahrzeug nach Anspruch 6, bei dem jedes Gestänge ein Verbindungselement (26) und einen Sperrklinkenarm (28) umfasst, wobei das Verbindungselement (26) an einem Ende zum Halterarm (23) und am anderen Ende zwischen den Enden des Sperrklinkenarms (28) schwenkbar ist, wobei der Sperrklinkenarm (28) so vorgesehen ist, dass eines seiner Enden zu einer Konsole (24), die an der Fahrzeugkarosserie (18) gesichert ist, um die Hecktürschwenkachse (A) schwenkbar ist und sein anderes Ende einen Schließer (31) hat, so dass das Sperrklinkenelement (32) in die Hecktür (12) eingreifen kann.

8. Fahrzeug nach Anspruch 7, bei dem das Sperrklinkenmittel (32) durch einen Freigabehebel (33) betätigt wird.

9. Fahrzeug nach Anspruch 8, bei dem der Freigabehebel (33) an der Hecktür (12) positioniert ist.

10. Fahrzeug nach einem der vorstehend aufgeführten Ansprüche, bei dem ein Hilfsmittel zwischen dem Halter (13) und der Fahrzeugkarosserie (18) vorgesehen ist, um dem Gewicht des Reserverads (11) entgegenzuwirken.

11. Fahrzeug nach einem der vorstehend aufgeführten Ansprüche, bei dem der Halter (13) eine Winde umfasst, um das Reserverad (11) vom Halter (13) aus bewegen zu können.

12. Fahrzeug nach einem der Ansprüche 2 bis 11, bei dem der Halter (13) ein Querelement (20) umfasst, das als eine Stoßfängerverstärkung wirkt, und wobei sich die Scharniermittel (22) an jedem Ende des Querelements (20) befinden.

## Revendications

1. Véhicule à moteur (10) comprenant une structure de carrosserie (18), un hayon (12) qui bascule autour d'un axe de pivotement de hayon (A) au moyen d'une charnière inférieure (19) connectée à la structure de carrosserie (18) entre une position fermée verticale et une position ouverte horizontale, une roue de secours (11) montée dans une position verticale derrière le hayon (12) lorsque le hayon (12) se trouve dans la position verticale au moyen d'un support de roue de secours (13) et d'un arrangement d'entraînement (22, 26, 23, 28) supportant le support (13) sur la structure de carrosserie (18) et agencé de telle sorte que la roue de secours (11) soit déplacée entre la position verticale et une position horizontale en dessous du hayon (12) lors du déplacement du hayon (12), **caractérisé en ce que** l'arrangement d'entraînement (22, 26, 23, 28) est agencé pour entraîner le support de roue de secours (13) à se déplacer par rapport au hayon (12) en direction de l'avant du véhicule (10) lorsque le hayon (12) est déplacé vers la position ouverte.

2. Véhicule selon la revendication 1, dans lequel l'arrangement d'entraînement comprend des moyens de charnière (22) définissant un axe de pivotement de support (25) qui est situé en avant de l'axe de pivotement de hayon (A), le support (13) pouvant basculer autour de l'axe de pivotement de support (25).

3. Véhicule selon la revendication 1 ou la revendication 2, dans lequel l'arrangement d'entraînement comprend en outre un moyen d'entraînement (26, 28) pour connecter le support de roue de secours (13) au hayon (12).

4. Véhicule selon la revendication 3, dans lequel le moyen d'entraînement comprend une paire de connexions (26, 28).

5. Véhicule selon la revendication 3 ou la revendication 4, dans lequel le moyen d'entraînement est détachable à l'aide d'un moyen de verrouillage (32).

6. Véhicule selon la revendication 5, dans lequel les moyens de charnière comprennent une paire d'ensembles de charnière (22), chaque ensemble de charnière (22) comprenant un bras de support (23) qui pivote autour de l'axe de pivotement de support (25) par rapport à la structure de carrosserie (18).

7. Véhicule selon la revendication 6, dans lequel chaque connexion comprend une bielle (26) et un bras de verrouillage (28), la bielle (26) pivotant à une extrémité par rapport au bras de support (23) et pivotant à l'autre extrémité entre les extrémités du bras de verrouillage (28), le bras de verrouillage (28) étant agencé de telle sorte que l'une de ses extrémités pivote par rapport à une console (24) qui est fixée à la carrosserie de véhicule (18), autour de l'axe de pivotement de hayon (A), et que son autre extrémité comprenne un percuteur (31) à engager avec le hayon (12) par le moyen de verrouillage (32).

8. Véhicule selon la revendication 7, dans lequel le moyen de verrouillage (32) est commandé par un doigt de désengagement (33).

9. Véhicule selon la revendication 8, dans lequel le doigt de désengagement (33) est positionné sur le hayon (12).

10. Véhicule selon l'une quelconque des revendications précédentes, dans lequel un moyen d'assistance est prévu entre le support (13) et la carrosserie de véhicule (18) pour compenser le poids de la roue de secours (11).

11. Véhicule selon l'une quelconque des revendications précédentes, dans lequel le support (13) comprend une manivelle utilisée pour écarter la roue de secours (11) du support (13).

12. Véhicule selon l'une quelconque des revendications 2 à 11, dans lequel le support (13) comprend un élément transversal (20) qui agit comme une armature de pare-chocs, et dans lequel les moyens de charnière (22) sont situés à chaque extrémité de l'élément transversal (20).
